# EUROPÄISCHE PATENTSCHRIFT

(11) **EP 4 241 293 B1**
(45) Veröffentlichungstag und Bekanntmachung des Hinweises auf die Patenterteilung: **25.02.2026**
(21) Anmeldenummer: 21844980.9
(22) Anmeldetag: 22.12.2021
(51) Int. Cl.: H01H 33/56, H01H 35/24, G01L 19/00

(54) **ISOLIERFLUIDÜBERWACHUNGSBLOCK SOWIE MONTAGEVERFAHREN**
INSULATING FLUID MONITORING BLOCK AND MOUNTING METHOD
BLOC DE SURVEILLANCE DE FLUIDE ISOLANT ET PROCÉDÉ DE MONTAGE

(30) Priorität: 14.01.2021 DE 102021200290
(43) Veröffentlichungstag der Anmeldung: 13.09.2023
(73) Patentinhaber: Siemens Energy Global GmbH & Co. KG, 81739 München (DE)
(72) Erfinder: LEHMANN, Thomas, 13583 Berlin (DE); GRÜNLER, Robert, 16515 Oranienburg (DE)
(86) Internationale Anmeldenummer: PCT/EP2021/087324
(87) Internationale Veröffentlichungsnummer: WO 2022/152537

(56) Entgegenhaltungen:
- WO-A1-2019/068617
- DE-A1- 10 036 071
- US-A- 4 772 132
- US-B2- 9 263 212

## Beschreibung

Die Erfindung betrifft einen Isolierfluidüberwachungsblock aufweisend einen Tragkörper mit einem Isolierfluidkanal mit einer Eingangsöffnung, wobei der Tragkörper eine Ausnehmung aufweist, in welche zumindest teilweise ein Sensorelement hineinragt.

Ein derartiger Isolierfluidüberwachungsblock ist beispielsweise aus der Offenlegungsschrift DE 100 36 071 A1 bekannt. Dort ist ein Isolierfluidüberwachungsblock beschrieben, welcher einen Tragkörper aufweist. Der Tragkörper ist auch mit einem Isolierfluidkanal ausgestattet. An dem Tragkörper können bei dem bekannten Isolierfluidüberwachungsblock ein Druckmessgerät sowie ein Dichteüberwachungsgerät angeschlossen werden. Bei dem bekannten Aufbau hat sich als nachteilig erwiesen, dass ein Nachrüsten in bestehende Strukturen nur erschwert möglich ist. Insbesondere stellt es sich als schwierig dar mehr als die beiden bekannten Geräte zur Druckmessung und Dichteüberwachung anzukoppeln.

Der Patentschrift US 9,263,212 B2 ist ein Gasleistungsschalter mit einem Gasdichtemonitoringsystem entnehmbar. Stirnseitig wird an einem oder mehreren Behältern ein Gasdichtegerät zum Verschluss einer Öffnung des Behälters angesetzt. Der internationalen Veröffentlichung WO 2019/068617 A1 ist ein Manometeranschluss entnehmbar, welcher in einem Gehäuse angeordneten Kanäle aufweist. Die Kanäle weisen Mündungsöffnungen mit Gewindegängen auf, um beispielsweise ein Manometer oder einen Anschlussnippel befestigen zu können. Dem Patent US 4,772,132 ist ein Sensor für fluide Systeme entnehmbar. Der Sensor ist mit einem Blindkanal ausgestattet, welcher einer Temperaturmessung sowie Druckmessung eines Fluides dient.

Daher ergibt sich als Aufgabe der Erfindung einen Isolierfluidüberwachungsblock anzugeben, welcher breitere Anwendungsmöglichkeiten eröffnet.

Erfindungsgemäß wird die Aufgabe bei einem Isolierfluidüberwachungsblock der eingangs genannten Art dadurch gelöst, dass das Sensorelement zumindest abschnittsweise Teil eines fluiddichten Verschlussmittels der Ausnehmung ist und das Verschlussmittel mittels Stoffschluss eine fluiddichte Barriere bildend innerhalb der Ausnehmung angeordnet ist, wobei die Ausnehmung mit dem Isolierfluidkanal über einen Stichkanal korrespondierend verbunden ist und der Isolierfluidkanal einen linearen Verlauf aufweist und an einem entgegengesetzten Ende zur Eingangsöffnung eine Ausgangsöffnung angeordnet ist.

Ein Isolierfluidüberwachungsblock wird eingesetzt, um ein elektrisch isolierendes Fluid hinsichtlich seines Zustandes zu überwachen. Diese Überwachung kann bevorzugt kontinuierlich erfolgen, es kann jedoch auch vorgesehen sein, dass lediglich ein zeitweises Überwachen vorgenommen wird. Elektrisch isolierende Fluide werden beispielsweise in Elektroenergieübertragungseinrichtungen eingesetzt. Elektrisch isolierende Fluide sind beispielsweise Gase oder Flüssigkeiten. Elektrisch isolierende Flüssigkeiten sind zum Beispiel Stoffe wie Isolieröle, Isolierester oder andere elektrisch isolierende Flüssigkeiten mit einer hinreichenden elektrischen Durchschlagsfestigkeit. Der Einsatz von elektrisch isolierenden Flüssigkeiten hat sich beispielsweise bei Transformatoren, Messwandlern, Schaltgeräten usw. als geeignet erwiesen. Elektrisch isolierende Fluide im gasförmigen Zustand sind Stoffe, welche insbesondere bei Betriebsbedingungen einen gasförmigen Zustand aufweisen. Elektrisch isolierende Fluide sind beispielsweise Gase wie Stickstoff, Sauerstoff, Kohlendioxid usw. Weiterhin sind fluorhaltige Stoffe (insbesondere Organofluoride) im gasförmigen Zustand verwendbar. Derartige fluoridhaltige Stoffe sind beispielsweise Fluorketone, Fluornitrile, Fluorolefine usw. Des Weiteren können aber auch anorganische Fluide wie zum Beispiel Schwefelhexafluorid Verwendung finden. Neben einer sortenreinen Verwendung verschiedener Fluide, können auch Mischungen verwendet werden. Mischungsverhältnis und Kombination sind je nach Einsatzzweck bedarfsweise abzustimmen. Als vorteilhaft haben sich beispielsweise Gemische mit Stickstoff, Sauerstoff sowie einem Organofluorid insbesondere Fluornitril erwiesen.

Bevorzugt kann vorgesehen sein, dass das elektrisch isolierende Fluid in einem hermetisch abschließenden Gehäuse (Kapselungsgehäuse) eingeschlossen ist. Somit ist ein unerwünschtes Verflüchtigen desselben vermieden. Um die elektrische Isolationsfestigkeit weiter zu erhöhen, kann vorgesehen sein, dass das elektrisch isolierende Fluid innerhalb des Gehäuses unter einen Überdruck gesetzt wird. D. h. der Druck des elektrisch isolierenden Fluids innerhalb des Gehäuses ist höher als der Druck in der Umgebung des Gehäuses. Über einen Isolierfluidkanal ist es möglich, dass beispielsweise innerhalb eines Gehäuses eingeschlossene Isolierfluid in den Tragkörper übertreten zu lassen und innerhalb des Tragkörpers fortzuleiten. Durch den Isolierfluidkanal ist es möglich das elektrisch isolierende Fluid mit verschiedenen Zonen/Bereichen korrespondieren zu lassen. Der Isolierfluidkanal wird durch Wandungen begrenzt, die eine ausreichende Dichtigkeit gegenüber dem eingesetzten elektrisch isolierenden Fluid aufweisen. Beispielsweise können die Wandungen des Isolierfluidkanals von einem Metall begrenzt werden. Bevorzugt kann dabei vorgesehen sein, dass der Tragkörper aus einem fluiddichten Material, bevorzugt einem Metall gefertigt ist.

Eine Ausnehmung am Tragkörper ermöglicht es einen geschützten Raum zu schaffen, in welchen ein Sensorelement hineinragen kann. Das Sensorelement ist dabei bevorzugt zumindest teilweise dem zu überwachenden elektrisch isolierenden Isolierfluid ausgesetzt. Insbesondere bei der Nutzung eines Tragkörpers aus einem metallischen Material kann dessen dielektrisch schirmende Wirkung genutzt werden, um die Messgenauigkeit des Sensorelementes zu unterstützen. Alternativ kann auch vorgesehen sein, dass lediglich Bereiche des Tragkörpers elektrisch leitend ausgebildet sind, um eine dielektrische Schirmwirkung zu erzielen. Beispielsweise können Oberflächen des Tragkörpers entsprechende Beschichtungen aufweisen. So kann zum Beispiel die Ausnehmung bzw. Bereiche um die Ausnehmung des Tragkörpers eine dielektrisch wirksame, insbesondere metallische Beschichtung aufweisen. Analog kann auch ein Isolierfluidkanal mit einer entsprechenden Beschichtung ausgekleidet sein. Die Ausnehmung kann entsprechend zumindest teilweise mit dem zu überwachenden bzw. zu überprüfenden Isolierfluid befüllt sein. Dazu kann vorgesehen sein, dass beispielsweise eine Probe des Isolierfluides in die Ausnehmung eingeleitet wird.

Es ist weiter vorgesehen, dass die Ausnehmung mit dem Isolierfluidkanal korrespondierend verbunden ist.

Eine Korrespondenz der Ausnehmung mit dem Isolierfluidkanal ermöglicht es, zu überwachendes elektrisch isolierendes Isolierfluid in die Ausnehmung überströmen zu lassen. Beispielsweise kann vorgesehen sein, dass die Ausnehmung stetig mit dem Isolierfluidkanal verbunden ist, wodurch stetig ein Durchspülen der Ausnehmung mit dem Isolierfluid erfolgen kann. Innerhalb der Ausnehmung kann dann ein Beproben des dort befindlichen Isolierfluides über das Sensorelement, welches zumindest teilweise in die Ausnehmung hineinragen kann, erfolgen. Insbesondere bei der Verwendung eines Isolierfluides, welches unter Überdruck steht, kann vorgesehen sein, dass die Ausnehmung derart ausgestaltet ist, dass dort ein gleichartiger Druck des elektrisch isolierenden Isolierfluides wie im Isolierkanal vorliegt. Die Ausnehmung sollte vorteilhaft als druckfeste hermetisch verschlossene Barriere (z.B. als Teil einer Kapselung) ausgebildet sein, sodass ein unerwünschtes Entweichen von Isolierfluid über die Ausnehmung erschwert ist. Um eine Korrespondenz mit dem Isolierfluidkanal zu ermöglichen, kann z.B. der Isolierfluidkanal in der Ausnehmung münden, die Ausnehmung passieren, die Ausnehmung tangieren oder ein separater Kanal kann eine Verbindung zwischen Isolierfluidkanal und Ausnehmung zur Verfügung stellen.

Weiter ist die Ausnehmung mit dem Isolierfluidkanal über einen Stichkanal korrespondierend verbunden.

Ein Stichkanal zwischen Isolierfluidkanal und Ausnehmung ermöglicht, dass im Isolierfluidkanal befindliche Isolierfluid in die Ausnehmung übertreten zu lassen. Der Stichkanal kann dazu Vorteilhafterweise ausschließlich dafür vorgesehen sein, eine Verbindung zwischen Isolierfluidkanal und Ausnehmung sicherzustellen. Der Stichkanal kann beispielsweise nach Art eines Abzweiges von dem Isolierfluidkanal abzweigen. Bevorzugt kann sowohl für den Isolierfluidkanal als auch für den Stichkanal ein linearer Verlauf vorgesehen sein. Dies ermöglicht insbesondere vereinfachte Fertigungsverfahren vorzusehen. Beispielsweise kann eine Herstellung des Tragkörpers nebst Kanälen, wie Isolierfluidkanal und Stichkanal durch subtraktive Fertigungsverfahren erfolgen. Zwischen Isolierfluidkanal und Stichkanal kann bevorzugt eine rechtwinklige Lage vorgesehen sein, so kann ein Abzweig gebildet werden, welcher eine im Wesentlichen T-förmige Ausrichtung aufweist.

Weiter ist vorgesehen, dass das Sensorelement zumindest abschnittsweise Teil eines fluiddichten Verschlussmittels der Ausnehmung ist.

Ein fluiddichtes Verschlussmittel dient einem zumindest abschnittsweisen Verschließen bzw. Unterteilen der Ausnehmung, sodass ein dort befindliches Isolierfluid nicht unmittelbar aus der Ausnehmung entweichen kann. Das Verschlussmittel kann innerhalb der Ausnehmung eine hermetische Barriere ausbilden. Ein Verschlussmittel kann beispielsweise ein Deckel oder eine Zwischenwandung oder ein Pfropfen usw. sein. Das Verschlussmittel kann die Ausnehmung überspannen oder sich durch die Ausnehmung hindurch erstrecken. Es kann vorgesehen sein, dass das Verschlussmittel innerhalb der Ausnehmung angeordnet ist, sodass die Ausnehmung in einen ersten Abschnitt und einen zweiten Abschnitt unterteilt ist. Der erste Abschnitt kann beispielsweise als Aktivabschnitt deklariert werden der zweite Abschnitt kann als Passivabschnitt deklariert werden. Der erste Abschnitt kann dem Isolierfluid ausgesetzt sein. Durch das fluiddichte Verschlussmittel ist ein Übertritt des Isolierfluides aus dem ersten Abschnitt in den zweiten Abschnitt verhindert. Das Verschlussmittel kann einen innerhalb der Ausnehmung zur Aufnahme des Isolierfluides vorgesehene Bereich (erstes Volumen, erster Abschnitt) dem Gesamtvolumen der Ausnahme abtrennen. Der erste Abschnitt kann sich beispielsweise unmittelbar an eine Mündungsöffnung eines Kanals, zum Beispiel eines Abzweigkanales Anschließen. Der erste Abschnitt kann beispielsweise auch so ausgestaltet sein das der Aktivteil des Sensorelementes unmittelbar an der Mündungsöffnung vorstehenden Kanales befindlich ist, sodass der erste Abschnitt nahezu vollständig durch die Mündungsöffnung gebildet ist. Der zweite Abschnitt kann beispielsweise genutzt werden, um ein Passivteil des Sensorelementes aufzunehmen. Dort kann beispielsweise eine Datenverarbeitungseinrichtung, eine Datenschnittstelle o. ä. untergebracht sein.

Es ist vorgesehen, dass das Verschlussmittel mittels Stoffschluss eine fluiddichte Barriere bildet. Dies kann beispielsweise dadurch erfolgen, dass das Verschlussmittel in flüssiger Form in die Ausnehmung eingebracht und dort ein Aushärten und damit ein Stoffschluss erfolgt, um ein winkelstarres Verschlussmittel bereitzustellen. Das Sensorelement kann dabei zumindest abschnittsweise einen Teil des fluiddichten Verschlussmittels ausbilden. Beispielsweise kann das Sensorelement das Verschlussmittel durchsetzen oder auch in das Verschlussmittel eingebettet sein. Ein Durchsetzen bzw. Einbetten des Verschlussmittels weist darüber hinaus den Vorteil auf, dass das Sensorelement zumindest abschnittsweise einerseits dem elektrisch isolierenden Isolierfluid ausgesetzt ist (Aktivteil) und andererseits ein Zugang zu dem Sensorelement (Passivteil) außerhalb des elektrisch isolierenden Isolierfluides gegeben ist. Neben einem Einbetten bzw. Durchsetzen, kann das Sensorelement auch als Teil einer diskreten Baugruppe, beispielsweise eines Deckels, welcher die Ausnehmung überspannt, ausgebildet sein.

Vorteilhafterweise kann weiter vorgesehen sein, dass die Ausnehmung von einem Deckel überspannt und verschlossen ist.

Ein Deckel kann beispielsweise alternativ oder zusätzlich zu einem Verguss der Ausnehmung vorgesehen sein. Der Deckel kann beispielsweise selbst für einen fluiddichten Verschluss der Ausnehmung sorgen. Es kann jedoch auch vorgesehen sein, dass der Deckel zusätzlich unabhängig von einer fluiddichten Wirkungsweise desselben eine Überspannung der Ausnehmung vornimmt. Dies weist den Vorteil auf das die Funktionalität des hermetischen Abschlusses des elektrisch isolierenden Fluids von der Umgebung von einer Funktion des Deckels getrennt ist. Somit besteht die Möglichkeit innerhalb der Ausnehmung einerseits das zu überwachende elektrisch isolierende Isolierfluid aufzunehmen, und andererseits in derselben Ausnehmung separiert von dem elektrisch isolierenden Isolierfluid weitere zur Funktion des Sensorelementes notwendige Baugruppen anzuordnen. Das Sensorelement kann dabei auch den Deckel durchsetzen bzw. Teil des Deckels sein. Der Deckel kann je nach Bedarf verschiedenartige Dichtigkeiten bei dem Überspannen der Ausnehmung ausbilden. Beispielsweise kann der Deckel einen fluiddichten, und oder druckfesten Verschluss der Ausnehmung bewirken. Alternativ kann der Deckel aber auch lediglich einen Berührungsschutz gewährleisten, wobei im Vergleich zu einer fluiddichten Ausführung, relativ grobes Material über einen Deckelverbund in die Ausnehmung hineingelangen kann.

Eine weitere vorteilhafte Ausgestaltung kann vorsehen, dass der Deckel eine Datenschnittstelle aufweist.

Der Deckel dient einem Überspannen der Ausnehmung, so dass die Ausnehmung geschützt ist. Dazu stützt sich der Deckel bevorzugt innenwändig/ stirnseitig an/ auf die Ausnehmung begrenzende Wandungen ab. Dort kann der Deckel eine winkelstarre Fixierung erfahren. Dies kann beispielsweise durch ein Verschrauben, eine Presspassung oder anderweitig geschehen. Bevorzugt sollte ein reversibles Lösen des Deckels möglich sein. Der Deckel bildet somit einen Abschluss der Ausnehmung sodass diese von außen nicht unmittelbar zugänglich ist. Entsprechend ist es vorteilhaft, wenn der Deckel eine Datenschnittstelle aufweist. Über die Datenschnittstelle können Informationen, welche von dem Sensorelement abgegeben werden in die Umgebung des Isolierfluidüberwachungsblocks abgegeben werden. Durch die Anordnung der Schnittstelle in/ an dem Deckel ist die Möglichkeit gegeben, je nach bevorzugtem Übertragungsmedium verschiedenartige Schnittstellen vorzusehen. Beispielsweise kann die Schnittstelle in Form einer leitungsgebundenen Schnittstelle ausgebildet sein. Zum Beispiel eine Steckverbindung zur Übertragung von elektrischen oder optischen Impulsen über eine Leitung aufweisen. Dazu kann die Schnittstelle beispielsweise in Form einen Kuppelkontakt, einen Steckkontakt usw. ausgebildet sein. Es kann jedoch auch vorgesehen sein, dass eine nicht leitungsgebundene Ankoppelung vorgesehen ist. In diesem Falle weist die Schnittstelle beispielsweise einen Sender und/ oder Empfänger zur Übertragung von elektrischen Impulsen auf. Dies kann beispielsweise eine Antenne zur Übertragung von hochfrequenten Signalen sein oder auch eine optische Kopplung zur Übertragung von Informationen im Bereich des sichtbaren oder nicht sichtbaren Lichtes beinhalten. Über die Datenschnittstelle kann eine Ankoppelung des Isolierfluidüberwachungsblockes bzw. des Sensorelementes des Isolierfluidüberwachungsblockes auch an einen Datenbus vorgenommen werden. Ein derartiger Datenbus ist bevorzugt ein Datenbus, welcher nach dem Mod-Bus Protokoll arbeitet. Unter Verwendung eines Kabelstranges können bei Verwendung einer "Daisy Chain" mehrere Sensoren eines oder mehrerer Isolierfluidüberwachungsblöcke miteinander verbunden werden.

Die Datenschnittstelle kann auf einer Innenseite oder einer Außenseite oder beiderseits des Deckels, den Deckel durchsetzend, angeordnet sein. Weiterhin bietet die Anordnung einer Datenschnittstelle an dem Deckel den Vorteil, dass variabel die Datenschnittstelle mit dem jeweiligen Sensorelement gekoppelt werden kann. Somit können verschiedenartige Sensoren zur Komplettierung des Isolierfluidüberwachungsblockes eingesetzt werden und verschiedenartige Schnittstellen bedarfsweise verwendet werden. Entsprechend kann vorgesehen sein, dass innenmantelseitig am Deckel eine Verbindung der Datenschnittstelle mit dem in der Ausnehmung angeordneten Sensorelement erfolgt. Bedarfsweise können dann verschiedenartige Datenschnittstelle an verschiedenen Deckeln vorgesehen sein, sodass ein flexibles Anpassen von bevorzugter Übertragungsart sowie bevorzugtem Sensorelement vorgenommen werden kann. Dies ermöglicht einen modularen Aufbau eines Isolierfluidüberwachungsblockes.

Vorteilhafterweise kann weiter vorgesehen sein, dass das Sensorelement einen Aktivteil und einen Passivteil aufweist, wobei der Aktivteil dem Isolierfluidkanal korrespondierend ausgesetzt ist und der Passivteil der Informationsverarbeitung des Aktivteiles dient.

Ein Aktivteil eines Sensorelementes dient der Erfassung einer physikalischen Größe eines Isolierfluids. Dazu ist der Aktivteil zumindest teilweise dem Isolierfluid ausgesetzt. Ein Passivteil eines Sensorelementes dient einer Umsetzung und Verarbeitung von Informationen, die von dem Aktivteil gewonnen werden. Somit ist die Möglichkeit gegeben den Passivteil von einer Beaufschlagung mit dem Isolierfluid freizuhalten. Weiterhin wird der Aktivteil von den Baugruppen des Passivteil des separiert. Somit reduziert sich das Bauvolumen des Aktivteils und das dem Isolierfluid auszusetzenden Bauvolumen. Als solches kann beispielsweise vorgesehen sein, dass der Aktivteil beispielsweise Teil einer fluiddichten Barriere ist, welche die Ausnehmung fluiddicht begrenzt sodass ein Austreten von Isolierfluid über die Ausnehmung erschwert ist. Zwischen Aktivteil und Passivteil besteht einen Kommunikationskanal (zum Beispiel leitungsgebunden oder nicht leitungsgebunden) um Informationen von dem Aktivteil in den Passivteil zu übertragen. Außerhalb des Isolierfluides und damit außerhalb einer hermetischen Kapselung für das Isolierfluid ist der Passivteil des Sensorelementes bevorzugt anzuordnen. Dort kann eine geeignete Atmosphäre vorliegen, welche die Funktionsweise des Sensorelementes insbesondere dessen Passivteil unterstützt. Von dem Passivteil des Sensorelementes kann eine Verbindung zu einer Datenschnittstelle bestehen, über welche in dem Passivteil weiter verarbeitete Informationen z.B. an ein übergeordnetes Überwachungs- oder Leitsystem gegeben werden können. Diese Datenschnittstelle ist bevorzugt an einem Deckel angeordnet, welcher die Ausnehmung überspannt. Vorteilhaft ist der Passivteil zumindest teilweise innerhalb der Ausnehmung angeordnet. Bei der Nutzung eines fluiddichten Verschlusselementes, welches eine Barriere innerhalb der Ausnehmung darstellt, kann auf der von dem Isolierfluid abgewandten Seite ein Montageraum geschaffen werden, innerhalb welchem sich der Passivteil zumindest teilweise erstreckt.

Vorteilhafterweise kann weiter vorgesehen sein, dass die Eingangsöffnung von einem Ventilkörper einer Eingangsarmatur gesteuert ist.

Eine Eingangsarmatur dient einem Abschluss der Eingangsöffnung des Isolierfluidkanals. Die Eingangsarmatur bildet somit eine standardisierte Schnittstelle, um den Isolierfluidkanal mit einer gegengleich ausgebildeten Schnittstelle zu verbinden. Nutzt man nunmehr die Eingangsarmatur, um ein Ventil anzuordnen, kann über den Ventilkörper des Ventils die Zugänglichkeit der Eingangsöffnung gesteuert werden. Beispielsweise kann vorgesehen sein, dass der Isolierkanal ein Betätigungsmittel aufweist, um den Ventilkörper in eine geöffnete oder geschlossene Position zu verbringen. Somit ist über die Eingangsarmatur eine Zugänglichkeit der Eingangsöffnung gesteuert. Dies weist den Vorteil auf, dass beispielsweise eine Montage der Eingangsarmatur erfolgen kann, ohne einen größeren Verlust von Isolierfluid zu befürchten. Erst bei einem ausreichend fluiddichten Verbund der Eingangsarmatur mit der Eingangsöffnung bzw. einer Wandung des Tragkörpers, welcher die Eingangsöffnung begrenzt, wird die Eingangsöffnung des Isolierfluidkanals über den Ventilkörper freigegeben und ein Übertritt von Isolierfluid durch die Eingangsöffnung in den Isolierfluidkanal kann erfolgen.

Es ist weiter vorgesehen, dass der Isolierfluidkanal einen linearen Verlauf aufweist und an einem entgegengesetzten Ende zur Eingangsöffnung eine Ausgangsöffnung angeordnet ist.

Ein linearer Verlauf eines Isolierfluidkanals ermöglicht es, mit subtraktiven Fertigungsverfahren einen Isolierfluidkanal in eine Tragkörper einzubringen. Beispielsweise kann der Isolierfluidkanal einen wesentlichen kreisförmigen, einen rechteckigen, einen elliptischen Querschnitt usw. aufweisen, welcher sich durch den Tragkörper hindurch erstreckt. Bevorzugt liegen dabei die Eingangsöffnung sowie die Ausgangöffnung an entgegengesetzt zueinander ausgerichteten Flächen (Seiten) des Tragkörpers. Bei der Verwendung eines im Wesentlichen quaderförmigen Tragkörpers sind die Eingangsöffnung und die Ausgangsöffnung bevorzugt in parallel zueinander liegenden Flächen, welche entgegengesetzt zueinander ausgerichtet sind befindlich. Die Eingangsöffnung sowie die Ausgangsöffnung sind dabei von den Körperkanten bzw. Flächen, in welchen sie münden bzw. von welchen sie umgeben sind, begrenzt. Die Eingangsöffnung sowie die Ausgangsöffnung begrenzen den Isolierfluidkanal in ihrem Verlauf innerhalb des Tragkörpers. Neben einem linear verlaufenden Isolierfluidkanal können auch ein Stichkanal oder weitere Kanäle vorgesehen sein, die bevorzugt ebenfalls einen linearen Verlauf aufweisen. Bevorzugt sollte die lineare Achse des jeweiligen Isolierfluidkanals lotrecht zu den Flächen liegen, in welchen die Mündungsöffnung jeweils münden.

Eine weitere vorteilhafte Ausgestaltung kann vorsehen, dass der Tragkörper im Wesentlichen quaderförmig, insbesondere würfelförmig ausgeformt ist.

Ein Tragkörper sollte bevorzugt eine Quaderform aufweisen. Dies ermöglicht eine vereinfachte Bearbeitung und Kompatibilität zu weiteren Baugruppen. An einem Quader liegen die zur Verfügung stehenden Seiten im Wesentlichen rechtwinklig zueinander. Dies ermöglicht es in einfacher Weise Isolierfluidkanäle, Stichkanäle usw. in Tragkörper einzubringen. Des Weiteren sind so in einfacher Form Schnittstellen an dem Tragkörper vorsehbar. Weiterhin ist es vereinfacht möglich eine Ausnehmung in eine Fläche des Quaders einzubringen. Bevorzugt sollte eine sich sacklochartig einstechende Ausnehmung im Wesentlichen rechtwinklig zu einem linearen Verlauf eines Isolierfluidkanals liegen. Die Ausnehmung kann beispielsweise eine rechtwinklige Grundfläche, eine vieleckige Grundfläche, eine elliptische Grundfläche oder eine kreisförmige Grundfläche usw. aufweisen. Die Einstichachse der Ausnehmung ist bevorzugt rechtwinklig zu einem linear verlaufenden Isolierfluidkanal ausgerichtet. Ein gegebenenfalls vorzusehen der Stichkanal erstreckt sich dann bevorzugt parallel zu der Einstichachse der Ausnehmung. Ist der Tragkörper im Wesentlichen würfelförmig ausgebildet ergibt sich eine gleichartige Gestalt der Flächen des Tragkörpers. Damit ist die Anwendbarkeit eines derartigen würfelförmigen Tragkörpers zusätzlich vereinfacht. Mündungsöffnungen, Ausnehmungen Kanäle usw. können bevorzugt zentrisch in der jeweiligen Würfelfläche liegen.

Eine weitere vorteilhaft Ausgestaltung kann vorsehen, dass die Eingangsöffnung und die Ausgangsöffnung von einer Eingangsarmatur und einer Ausgangsarmatur abgeschlossen sind, die jeweils verteilt um die Eingangsöffnung und die Ausgangsöffnung Befestigungspunkte aufweisen, welche in Fluchtrichtung versetzt zueinander angeordnet sind.

Eine Eingangsarmatur sowie eine Ausgangsarmatur ermöglichen es die Eingangsöffnung bzw. die Ausgangsöffnung abzuschließen und einen definierten Übergang herzustellen. Über die Armaturen ist ein Anschließen des Isolierfluidkanals an ein Fluidvolumen, insbesondere ein Gasvolumen ermöglicht. Dazu können die Eingangsarmatur sowie die Ausgangsarmatur entsprechende steckerförmige bzw. buchsenförmige Ausgestaltungen aufweisen. Dabei kann vorgesehen sein, dass die Eingangsöffnung bzw. die Ausgangsöffnung jeweils gleichartig aufgebaut sind, sodass gleichartige gegengleiche Schnittstellen sowohl mit Eingangsöffnung als auch mit Ausgangsöffnung verbunden werden können. Weiterhin kann vorgesehen sein, dass die Eingangsarmatur sowie die Ausgangsarmatur gegengleiche Schnittstellen aufweisen, sodass eine Aneinanderreihung mehrerer Isolierfluidüberwachungsblöcke über deren jeweilige Eingangsarmatur bzw. Ausgangsarmaturen ermöglicht ist. So lässt sich eine kettenartige Aneinanderreihung von einer Vielzahl von Isolierfluidüberwachungsblöcken in einfacher Weise realisieren. Dies ermöglicht es verschiedene Isolierfluidüberwachungsblöcke einzusetzen, die mit verschiedenen Sensorelementen ausgestattet sind, die verschiedene physikalische Parameter eines Isolierfluides überwachen.

Um die Eingangs- bzw. die Ausgangsarmatur mit dem Tragkörper zu verbinden und eine Mündungsöffnung (Eingangsöffnung bzw. Ausgangsöffnung) abzuschließen sind entsprechende Befestigung punkte vorzusehen. Mehrere Befestigungspunkte können jeweils um die Eingangsöffnung beziehungsweise Ausgangsöffnung verteilt angeordnet sein. Bevorzugt können mehrere Befestigungspunkten vorgesehen sein, die beispielsweise auf gleichartigen Kreisbahnen um die Eingangsöffnung bzw. die Ausgangsöffnung verteilt angeordnet sind. Sieht man nunmehr in Fluchtrichtung (bei einer linearen Gestalt des Isolierfluidkanales Fluchtrichtung gleich Kanalrichtung) einen Versatz der Befestigungspunkten an Eingangsöffnung bzw. Ausgangsöffnung vor, so ist es möglich eine Eingangsarmatur und eine Ausgangsarmatur unabhängig voneinander mit dem Tragkörper zu verbinden und dabei in Fluchtrichtung überlappende Befestigungsmittel wie zum Beispiel Bolzen zu verwenden. Dadurch ist es möglich auch bei kurzbauenden Tragkörpern (würfelförmig) eine ausreichende Verankerung der Verbindungselemente (Befestigungsmittel) für die Eingangsarmatur bzw. Ausgangsarmatur zu erzielen, wobei die Befestigungspunkte bzw. die Verbindungselemente versetzt zueinander angeordnet sind. Somit ist es beispielsweise möglich für die Armaturen gleichartige Befestigungspunkte zu verwenden und flexibel Eingangsarmatur sowie Ausgangsarmatur gegeneinander auszutauschen.

Eine weitere vorteilhafte Ausgestaltung kann vorsehen, dass die Eingangsöffnung ein Betätigungselement für einen Ventilkörper zum Steuern eines Zugangs zum Isolierfluidkanal aufweist.

Die Zugänglichkeit der Eingangsöffnung kann beispielsweise mittels eines Ventils bzw. eines Ventilkörpers gesteuert werden. Mit der Ausstattung der Eingangsöffnung mit einem Betätigungsmittel ist die Möglichkeit gegeben in Abhängigkeit der Lage der Eingangsöffnung relativ zu einem anderen Element, beispielsweise einer Eingangsarmatur, die Mündungsöffnung des Isolierfluidkanals freizugeben bzw. zu sperren. Das Betätigungselement kann beispielsweise weggesteuert den Ventilkörper betätigen. Bei dem Betätigungselement kann es sich beispielsweise um einen Stößel handeln, welcher den Ventilkörper gegen eine Federkraft aus seinem Sperrsitz herausdrückt. So ist es beispielsweise möglich, dass im Zuge einer Montage des Isolierfluidüberwachungsblockes bei einem ausreichenden Vorliegen eines Dichtsitzes weggesteuert in die Mündungsöffnung zu überwachendes Isolierfluid einströmen zu lassen, so dass der Isolierfluidkanal befüllt wird.

Eine weitere vorteilhafte Ausgestaltung kann vorsehen, dass der Isolierfluidkanal an einen Gasraum eines Kapselungsgehäuses einer Elektroenergieübertragungseinrichtung angekoppelt ist.

Eine Elektroenergieübertragungseinrichtung ist eine Einrichtung, welche dazu dient, einen elektrischen Strom getrieben von einer Spannungsdifferenz zwischen zwei Punkten zu übertragen. Derartige Elektroenergieübertragungseinrichtungen sind beispielsweise fluidisolierte Schaltanlagen, fluidisolierte Leistungsschalter, fluidisolierte Transformatoren, fluidisolierte Messwandler und so weiter. Derartige fluidisolierte Elektroenergieübertragungseinrichtungen weisen ein Kapselungsgehäuse auf, welches in seinem Innern ein elektrisch isolierendes Fluid hermetisch eingehaust und abschließt. Im Innern des Kapselungsgehäuses angeordnete Phasenleiter werden von dem dort eingehausten Fluid umspült und durch dieses Fluid elektrisch isoliert. Zur Sicherstellung der Isolationsfestigkeit der Fluidisolation im Innern des Kapselungsgehäuses, werden Isolierfluidüberwachungsblöcke eingesetzt. Dazu wird ein Isolierfluidkanal mit dem Gasraum, welcher sich im Innern des Kapselungsgehäuses befindet und mit dem Isolierfluid befüllt ist angeschlossen. Das innerhalb des Kapselungsgehäuses eingeschlossene Isolierfluid strömt über den Isolierfluidkanal in den Isolierfluidüberwachungsblock hinein. Am bzw. im Isolierfluidüberwachungsblocks kann nunmehr eine Überwachung des Isolierfluides erfolgen.

Vorteilhafterweise werden Isolierfluidüberwachungsblöcke an Kapselungsgehäusen von Elektroenergieübertragungseinrichtungen angeschlossen, die im Mittel- und Hochspannungsbereich Elektroenergie übertragen. Übliche Spannungsebene sind dabei Spannungen oberhalb von 10.000 V, über mehrere 10.000 V, mehrere 100.000 V bis in den Millionen Voltbereich hinein.

Eine weitere Aufgabe der Erfindung ist es, eine Montageverfahren anzugeben mittels, welchem ein Isolierfluidüberwachungsblock in einfacher und effizienter Weise an seinem Arbeitsort festgelegt werden kann.

Bei einem Montageverfahren eines Isolierfluidüberwachungsblockes gemäß der vorstehend beschriebenen Ausführung wird die Aufgabe dadurch gelöst, dass eine Eingangsarmatur mit einer Fluidbehälterwandung verbunden wird und die Eingangsöffnung des Isolierfluidkanals mit der Eingangsarmatur abgeschlossen wird.

Ein Isolierfluidüberwachungsblock dient der Überwachung eines Isolierfluids. Ein Isolierfluid es beispielsweise ein elektrisch isolierendes Gas oder eine elektrisch isolierende Flüssigkeit, welche innerhalb einer Kapselung (Kapselungsgehäuse), welche durch eine fluiddichte Behälterwandung begrenzt ist, bevorzugt hermetisch eingeschlossen ist. Innerhalb der Kapselung kann beispielsweise ein Phasenleiter angeordnet sein, welcher umspült von dem elektrisch isolierenden Isolierfluid elektrisch isoliert ist.

Um die Isolationsfestigkeit und die elektrische Stabilität innerhalb der Kapselung zu gewährleisten ist das Isolierfluid zu überwachen/ zu überprüfen. Eine derartige Überprüfung kann unter Nutzung eines Isolierfluidüberwachungsblocks erfolgen. Dazu ist der Isolierfluidüberwachungsblock mit dem Isolierfluid zu beaufschlagen. Insbesondere ist das Isolierfluid in den Isolierfluidkanal einzuleiten.

Vorteilhaft kann dabei vorgesehen sein, dass zunächst eine Eingangsarmatur mit einer Fluidbehälterwandung (Kapselungsgehäusewandung) verbunden wird. Diese Verbindung sollte dabei fluiddicht ausgeführt sein. Die Eingangsarmatur dient dabei einem Abschluss einer Eingangsöffnung eines Isolierfluidkanales, welche in dem Tragkörper angeordnet ist. Nachdem die Eingangsarmatur mit einer Kapselungsgehäusewandung verbunden ist, kann nunmehr die Eingangsöffnung des Isolierkanales mit der Eingangsarmatur abgeschlossen werden. Dazu kann beispielsweise vorgesehen sein, dass der Tragkörper mit der Eingangsarmatur winkelstarr verbunden wird, sodass eine dort befindliche Eingangsöffnung von der Eingangsarmatur begrenzt ist.

Eine weitere vorteilhafte Ausgestaltung kann vorsehen, dass in einem gemeinsamen Arbeitsschritt eine Ausgangsöffnung des Isolierfluidkanals mit einer Ausgangsarmatur abgeschlossen wird und die Eingangsöffnung mit einer Eingangsarmatur abgeschlossen wird.

Die Verwendung eines gemeinsamen Arbeitsschrittes, um nahezu zeitgleich die Ausgangsöffnung und die Eingangsöffnung mit einer Ausgangsarmatur bzw. mit einer Eingangsarmatur abzuschließen, hat den Vorteil, dass ein vereinfachtes Montieren des Isolierfluidüberwachungsblockes vorgenommen werden kann. Beispielsweise kann ein gemeinsamer Arbeitsschritt dadurch erzwungen werden, dass eine Fixierung der Eingangsarmatur und der Ausgangsarmatur mittels gemeinsamer Befestigungsmittel (z.B. Langbolzen) erfolgt. So kann auch sichergestellt werden, dass eine korrekte Ausrichtung der beiden Armaturen zueinander relativ zu der Eingangsöffnung und der Ausgangsöffnung erzwungen wird. Weiterhin kann eine Einsparung von Material erfolgen da zum Beispiel gemeinsame Befestigungsbolzen für das Befestigen beider Armaturen gemeinsam verwendet werden können. Weiterhin hat dies den Vorteil das beispielsweise eine Montage des Isolierfluidüberwachungsblocks unter Druckbeaufschlagung des Isolierfluides innerhalb eines Kapselungsgehäuses erfolgen kann. Durch die zeitweise zeitgleiche Montage kann ein ausreichendes Dichten der Armaturen und ein mit dem Voranschreiten der Dichtwirkung gesteuertes Überströmen von Isolierfluid in den Isolierfluidkanal sichergestellt werden. So kann in einem gemeinsamen Arbeitsschritt eine Verbindung der Armaturen und ein Abschluss/ Verschluss der Eingangsöffnung bzw. der Ausgangsöffnung vorgenommen werden und zusätzlich auch die Voraussetzung geschaffen werden, um ein unter Druck setzen bzw. Beströmen des Isolierfluidkanals zu ermöglichen. Ebenso ist ein Ersatz bzw. Austausch von Armaturen durch die Nutzung eines gemeinsamen Arbeitsschrittes und einer sich daraus vorteilhaft ergebenden Verwendung von gemeinsamer Befestigungsmittel zur Befestigung der Ausgangsarmatur und zur Befestigung der Eingangsarmatur ermöglicht.

Vorteilhafterweise kann weiter vorgesehen sein, dass eine Ausgangsöffnung des Isolierfluidkanals mit einer Ausgangsarmatur vor einem Abschluss der Eingangsöffnung, mit der der Eingangsarmatur abgeschlossen wird.

Durch das Nutzen zweier Arbeitsschritte, um zunächst die Ausgangsöffnung mit der Ausgangsarmatur abzuschließen und darauffolgend die Eingangsöffnung mit der Eingangsarmatur abzuschließen, ist die Möglichkeit gegeben die Armaturen unabhängig voneinander vor der Öffnung zu platzieren und dort zu fixieren. Somit wird zwar ein weiterer Arbeitsschritt gegenüber einer gemeinsamen Befestigung derselben nötig, jedoch kann ein individuelles Abstimmen von Armaturen und Öffnungen zueinander vorgenommen werden. Ebenso ist ein Ersatz bzw. Austausch von Armaturen durch die Nutzung zweier Arbeitsschritte und einer sich daraus vorteilhaft ergebenden Verwendung von unterschiedlichen Befestigungsmitteln zur Befestigung der Ausgangsarmatur und zur Befestigung der Eingangsarmatur ermöglicht.

Vorteilhafterweise kann weiter vorgesehen sein, dass mit einem Abschluss der Eingangsöffnung durch die Eingangsarmatur über ein Betätigungselement ein Ventilkörper angesteuert wird.

Mit einem Abschluss der Eingangsöffnung durch die Eingangsarmatur besteht die Möglichkeit mit voranschreiten der Komplettierung des Isoliergasüberwachungsblockes einen Ventilkörper anzusteuern, welcher geöffnet wird, sobald ein dichtender Verbund zwischen der Eingangsöffnung sowie der Eingangsarmatur gegeben ist. Der Ventilkörper kann dabei Teil eines Ventils sein, welches in der Eingangsarmatur angeordnet ist. Die Eingangsöffnung kann beispielsweise ein Betätigungselement enthalten, welches den Ventilkörper betätigt, sobald ein ausreichender Dichtverbund zwischen Eingangsöffnung und Eingangsarmatur vorliegt. Umgekehrt kann bei einer Demontage über das Betätigungsmittel ein Verschluss des Ventils vor einer Aufhebung eines Dichteverbundes zwischen Eingangsöffnung und Eingangsarmatur erfolgen.

Im Folgenden wird ein Ausführungsbeispiel der Erfindung schematisch in einer Zeichnung gezeigt und nachfolgend näher beschrieben.

Dabei zeigt die
- Figur 1: einen Schnitt durch eine Isolierfluidüberwachungsblocks im montierten Zustand, die
- Figur 2: stirnseitige Ansichten einer Eingangsöffnungsarmatur und einer Ausgangsöffnungsarmatur, die
- Figur 3: einen ersten Montageschritt eines Isolierfluidüberwachungsblocks und die
- Figur 4: einen zweiten Montageschritt eines Isolierfluidüberwachungsblocks.

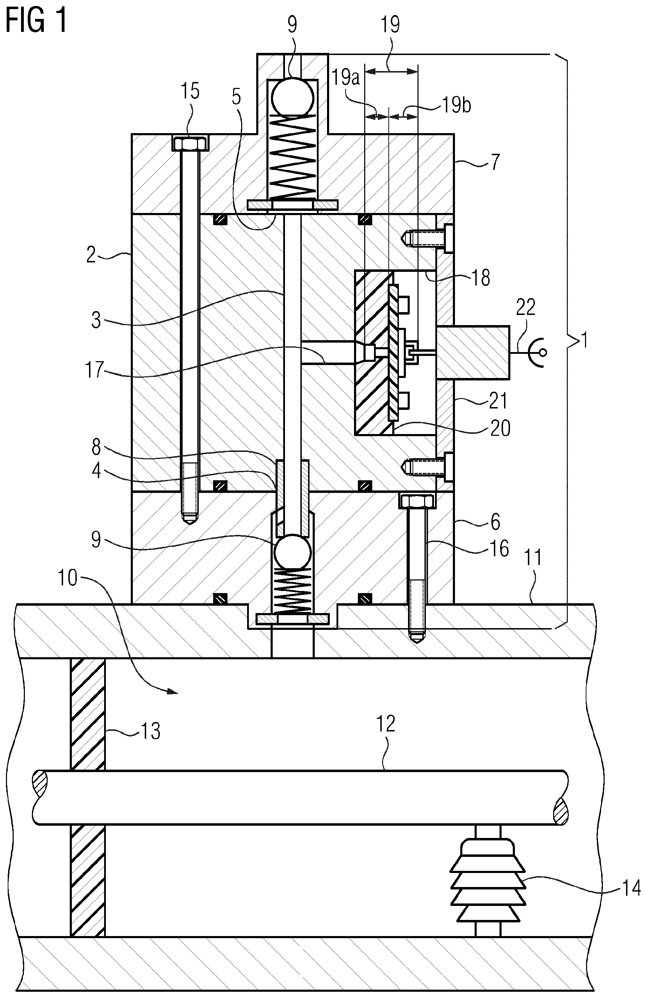

Die Figur 1 zeigt einen Schnitt durch einen schematisch aufgebauten Isolierfluidüberwachungsblock 1**.** Der Isolierfluidüberwachungsblock 1 weist einen Tragkörper 2 auf. Der Tragkörper 2 ist vorliegend beispielhaft ein metallischer Block in Quaderform, insbesondere in Würfelform. Der Tragkörper 2 ist von einem Isolierfluidkanal 3 durchsetzt. Der Isolierfluidkanal 3 weist eine lineare Erstreckung auf. Der Isolierfluidkanal 3 weist eine Eingangsöffnung 4 sowie eine Ausgangsöffnung 5 auf. Die Eingangsöffnung 4 und die Ausgangsöffnung 5 liegen jeweils in entgegengesetzt zueinander gerichteten Flächen (Seiten) des Tragkörpers 2**.** Jene die Ausgangsöffnung 5 und die Eingangsöffnung 4 jeweils begrenzenden Seiten des Tragkörpers 2, sind im Wesentlichen eben ausgebildet und entgegengesetzt zueinander ausgerichtet. Der Isolierfluidkanal 3 mit seinen Eingangs- bzw. Ausgangsöffnungen 4, 5 liegt dabei im Wesentlichen zentrisch in denen die Eingangs- bzw. Ausgangsöffnung 4, 5 begrenzenden Flächen. Die Eingangsöffnung 4 ist von einer Eingangsarmatur 6 abgeschlossen. Die Ausgangsöffnung 5 ist von einer Ausgangsarmatur 7 abgeschlossen. Die Eingangsarmatur 6 sowie die Ausgangsarmatur 7 sind vorliegend ebenfalls metallisch ausgebildet und liegen dichtend an dem Tragkörper 2 an. Dazu sind um die Eingangsöffnung 4 sowie die Ausgangsöffnung 5 verlaufend in die jeweilige Fläche des Tragkörpers 2 Ringnuten eingebracht (alternativ oder ergänzend ist auch eine Anordnung einer Ringnut in der Eingangsarmatur 6 und/ oder der Ausgangsarmatur 7 möglich), in welchen Dichtringe liegen, welche jeweils einen Fügespalt zwischen der Eingangsarmatur 6 sowie der Ausgangsarmatur 7 sowie dem Tragkörper 2 dichten. Die Eingangsöffnung 4 ist mit einem Betätigungsmittel 8 ausgestattet, welches in Form eines hülsenförmigen Stößels, einen Hülsenkanal ausbildend, ausgeführt ist. Das Betätigungsmittel 8 dient einem betätigen eines Ventilkörper 9 eines Ventils, welches in der Eingangsarmatur 6 angeordnet ist. Über den Ventilkörper 9 kann die Eingangsöffnung 4 des Isolierfluidkanals 3 in Abhängigkeit der Relativlage von Tragkörper 2 und Eingangsarmatur 6 mit einem Gasraum 10 korrespondieren oder von diesem abgesperrt werden. Die Eingangsarmatur 6 ist dazu mit einer Kapselungwandung 11, welche den Gasraum 10 begrenzt winkelstarr und gedichtet verbunden. Über die Eingangsarmatur 6 und den dort befindlichen Ventilkörper 9 des Ventils ist ein Zugang durch die Wandung des Kapselungsgehäuses 11 in den Gasraum 10 ermöglicht, wobei über den Ventilkörper 9 ein Öffnen und Schließen dieses Zuganges erfolgt. Der Gasraum 10 ist Teil einer Elektroenergieübertragungseinrichtung, in dessen Inneren ein Phasenleiter 12 angeordnet ist. Der Phasenleiter 12 dient einer Führung eines elektrischen Stromes, welcher von einer Spannungsbeaufschlagung getrieben ist. Der Phasenleiter 12 ist dabei relativ zum Kapselungsgehäuse 11 zum Beispiel über eine Scheibenisolator 13 oder eine Stützisolator 14 elektrisch isoliert gehalten. Das Kapselungsgehäuse 11 ist beispielsweise aus einem Isoliermaterial oder elektrisch leitenden Material gefertigt. Ein im Gasraum 10 befindliches elektrisch isolierendes Fluid dient einer Isolation des Phasenleiters 12, indem das elektrisch isolierende Fluid den Phasenleiter 12 umspült. Zur Erhöhung der dielektrischen Festigkeit des elektrisch isolierenden Fluids, kann das elektrisch isolierende Fluid unter einem erhöhten Druck stehen, der beispielsweise höher ist, als der Druck der äußeren Umgebung des Kapselungsgehäuses 11.

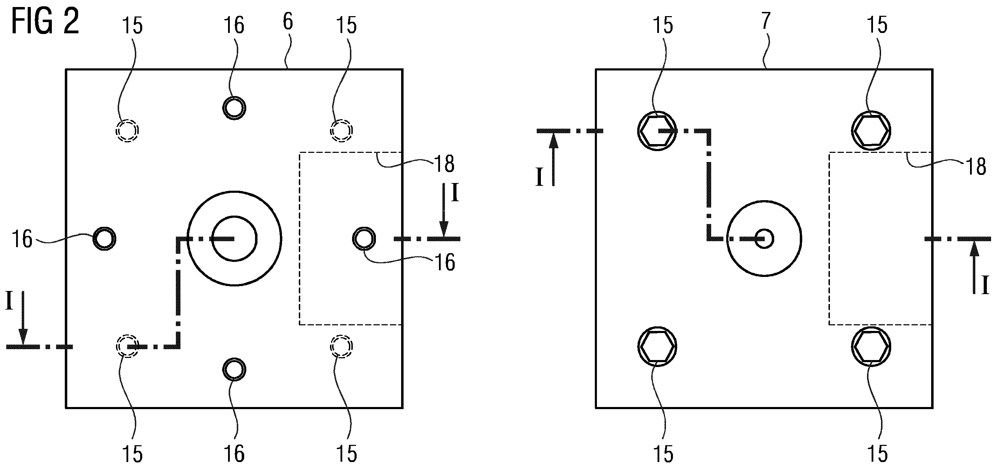

Die Ausgangsöffnung 5 des Isolierfluidkanals 3 ist von der Ausgangsarmatur 7 abgeschlossen. In der Ausgangsarmatur 7 befindet sich ebenfalls ein Ventilkörper 9, welcher einem Abschluss bzw. einem Verschluss der Ausgangsöffnung 5 dient. Auch hier ist im Fügespalt zwischen der Ausgangsarmatur 7 sowie dem Tragkörper 2 eine Ringnut eingebracht, in welche ein Dichtungsring eingelegt ist, um einen dichtenden Abschluss zwischen dem Tragkörper 2 sowie der Ausgangsarmatur 7 sicherzustellen. Um ein Sichern des Dichtverbundes zwischen dem Tragkörper 2 und der Eingangsarmatur 6 sowie der Ausgangsarmatur 7 sicherzustellen sind mehrere Langbolzen 15 vorgesehen. Aufgrund der Lage der Schnittebene gemäß Figur 1 ist lediglich einer der Langenbolzen 15 erkennbar. In der Figur 2 ist die Lage mehrerer Langbolzen 15 sichtbar. Die Langbolzen 15 durchsetzen Durchgangsöffnungen der Ausgangsarmatur 7 sowie des Tragkörpers 2 und greifen in Gewindesackbohrungen der Eingangsarmatur 6 ein. Unter Zwischenlage des Tragkörpers 2 können die Eingangsarmatur 6 und die Ausgangsarmatur 7 aneinander gezogen werden. Die Eingangsarmatur 6 weist Ausnehmungen auf, um Kurzbolzen 16 aufzunehmen (Lage in Figur 1 angedeutet). Die Position und Relativlage der Kurzbolzen 16 ist in der Figur 2 gezeigt. Die Kurzbolzen 16 greifen dabei in Gewindesackbohrungen einer Wandung des Kapselungsgehäuses 11 ein, sodass die Eingangsarmatur 6 mit einer von dem Tragkörper 2 abgewandten Fläche gegen eine Wandung des Gasraumes 10 gepresst ist. Ein sich zwischen Eingangsarmatur 6 und Wandung des Kapselungsgehäuses 11 einstellender Fügespalt wird über einen Dichtring, welcher in eine Ringnut eingelegt ist, wobei die Ringnut konzentrisch zur Eingangsöffnung 4 ausgerichtet ist, gedichtet. Durch diese Konstruktion ist gewährleistet, dass die Eingangsarmatur 6 winkelstarr mit dem Kapselungsgehäuse 11 verbunden ist, sodass gesteuert über den Ventilkörper 9 des Ventils der Eingangsarmatur 6 eine Kommunikation des Isolierfluidkanals mit dem Gasraum 10 gewährleistet ist. Über die Langbolzen 15 ist nunmehr auch der Tragkörper 2 sowie die Ausgangsarmatur 7 über die Eingangsarmatur 6 winkelstarr mit dem Kapselungsgehäuse 11 verbunden. Beispielhaft ist hier vorgesehen, dass der winkelstarre Verbund sowohl der Eingangsarmatur 6 als auch der Ausgangsarmatur 7 durch ein und dieselben Langenbolzen 15 sichergestellt ist. Es kann jedoch auch vorgesehen sein, dass die Eingangsarmatur 6 unabhängig von der Ausgangsarmatur 7 über separate Befestigungsmittel jeweils individuell mit dem Tragkörper 2 verbunden sind.

Der Isolierfluidkanal 3 erstreckt sich von der Eingangsöffnung 4 zu der Ausgangsöffnung 5 mit einem linearen Verlauf.

Lotrecht zum Isolierfluidkanal 3 ist ein Stichkanal 17 angeordnet, welcher in den Isolierfluidkanal 3 mantelseitig 3 mündet. Am von dem Isolierfluidkanal 3 abgewandten Ende des Stichkanales 17 mündet derselbe in einer Ausnehmung 18. Die Ausnehmung 18 ist nach Art eines Sackloches in eine Fläche (Seite) des Tragkörpers 2 eingebracht. Die Grundfläche der Ausnehmung 18 kann dabei variabel gestaltet sein. Je nach Bedarf kann es sich dabei um einen rechteckigen, einen mehreckigen, einen kreisrunden, einen elliptischen, einen vieleckigen usw. Querschnitt handeln. Im Bodenbereich (Grundfläche) der Ausnehmung 18 mündet der Stichkanal 17. Alternativ kann auch vorgesehen sein, dass die Ausnehmung 18 unmittelbar an den Isolierfluidkanal 3 angeschlossen ist. In der Ausnehmung 18 ist ein Sensorelement 19 angeordnet. Das Sensorelement 19 weist einen Aktivteil 19a sowie einen Passivteil 19b auf. Das Aktivteil 19a des Sensorelementes 19 steht in Korrespondenz mit dem Stichkanal 17 und somit ist das Aktivteil 19a des Sensorelementes 19 einem in dem Stichkanal 17 bzw. dem Isolierfluidkanal 3 befindlichem Isolierfluid ausgesetzt. Um den Stichkanal 17 und damit auch den Isolierfluidkanal 3 fluiddicht zu verschließen, ist ein Verschlussmittel 20 vorgesehen. Vorliegend ist das Verschlussmittel 20 nach Art eines Vergusses in die Ausnehmung 18 eingebracht, wobei das Sensorelement 19 zumindest abschnittsweise Teil einer fluiddichten Barriere des Verschlussmittel 20 ist. Dazu ist das Sensorelement 19 durch Verguss in das Verschlussmittel 20 eingebettet. Vorteilhaft handelt es sich bei dem Verschlussmittel 20 um eine elektrisch isolierenden Feststoff, welcher in flüssiger Form zwecks Verguss in die Ausnehmung 18 eingebracht wird. Bezogen auf die Sperrrichtung des Verschlussmittels 20 ist der Aktivteil 19a in Richtung des Stichkanals 17 bzw. des Isolierfluidkanals 3 orientiert, wo hingegen der Passivteil 19b in Richtung eines die Ausnehmung 18 überspannenden Deckels 21 orientiert ist. Der Passivteil 19b ist vorliegend ebenfalls zumindest teilweise in das Verschlussmittel 20 eingebettet und dadurch winkelstarr fixiert. Beispielsweise weist der Passivteil 19b eine Platine auf, welche ortsfest durch Einbettung in das Verschlussmittel 20 gelagert ist. Der Passivteil 19b weist eine Schnittstelle auf, um mit einer im bzw. am Deckel 21 befindlichen Datenschnittstelle 22 verbunden zu werden. Bei der Datenschnittstelle 22 handelt es sich beispielsweise um eine Buchse oder einen Stecker um eine Leitung einzuschließen, welche der Weiterleitung von Daten des Sensorelementes 19 dient. Alternativ kann die Datenschnittstelle 22 auch leitungslos ausgebildet sein, um beispielsweise in Form von Licht oder anderer Strahlung Strahlung Daten zu übertragen. Dazu kann die Datenschnittstelle 22 beispielsweise eine Antenne oder ein Optokoppler aufweisen. Um die Datenschnittstelle 22 mit dem Sensorelement 19 zu verbinden, ist vorliegend vorgesehen, dass eine Steckverbindung zwischen Datenschnittstelle 22 und Sensorelement 19 vorliegt. Alternativ kann auch eine Drahtverbindung in Form einer flexiblen Leitung zwischen Datenschnittstelle 22 und Sensorelement 19 vorgesehen sein.

Der Isolierfluidüberwachungsblock 1 dient einer Überwachung eines im Gasraum 10 befindlichen elektrisch isolierenden Isolierfluides. Über die Eingangsarmatur 6 und die Eingangsöffnung 4 des Isolierfluidkanales 3 und den Stichkanal 17 wird das zu überwachende Isolierfluid bis zu dem Aktivteil 19a des Sensorelementes 19 geleitet. Je nach Ausgestaltung des Sensorelementes 19 können eine oder mehrere physikalische Eigenschaften des Isolierfluides überwacht werden. Beispielsweise können die Temperatur, die Dichte, der Druck, die Zusammensetzung des Isolierfluides usw. von dem Sensorelement 19 erfasst werden. Je nach Ausgestaltung kann das Sensorelement 19 eine oder mehrere physikalische Größen erfassen. Je nach Bedarf können mehrere Isolierfluidüberwachungsblocks 1 mit verschiedenen Sensorelementen 19, welche dem Erfassen verschiedener physikalischer Größen dienen über die jeweiligen Eingangs- beziehungsweise Ausgangsarmaturen 6, 7 miteinander verbunden werden. Über die jeweiligen Isolierfluidkanäle 3 der jeweiligen Isolierfluidüberwachungsblocks 1 ist es möglich kaskadenartige Isolierfluid ausgehend von dem Gasraum 10 bis zu den jeweiligen Sensorelementen 19 der mehreren hintereinander verschalteten Isolierfluidüberwachungsblöcke 1 zu verteilen.

Zum Übertragen von Daten, welche durch das Sensorelement 19 erfasst werden, kann beispielsweise ein Übertragungsbus verwendet werden. Ein geeigneter Bus ist beispielsweise der Mod-Bus bzw. das Mod-Busprotokoll. Bei der Verwendung mehrerer Isolierfluidüberwachungsblöcke 1 bzw. mehrerer Sensorelemente 19, ist über eine gemeinsame Leitung eine Verbindung nach Art einer "Daisy Chain" möglich.

Erfolgt der Einsatz lediglich eines Isolierfluidüberwachungsblocks 1 steht endseitig die Ausgangsarmatur 7 zur Verfügung. Auch bei der Koppelung mehrerer Isolierfluidüberwachungsblöcke 1 steht endseitig eine Ausgangsarmatur 7 zur Verfügung. An dieser Ausgangsarmatur 7 kann über die dortige Schnittstelle auch ein weiteres diskretes Sensorelement angekoppelt werden. Bedarfsweise kann dieses ausgetauscht werden. Dies kann auch unter Druckbeaufschlagung des Isolierfluidkanals dienen, da über einen Ventilkörper 9 der Ausgangsarmatur 7 einem entweichen von Isolierfluid aus der Ausgangsöffnung 5 des Isolierfluidkanales 3 entgegengewirkt ist. Ein derartiges weiteres Sensorelement kann beispielsweise ein diskreter Dichtewächter sein.

Die Figur 2 zeigt stirnseitig jeweils die Eingangsarmatur 6 bzw. die Ausgangsarmatur 7**.** Um den zentrisch angeordneten Isolierfluidkanal 3, welcher bezüglich der Zeichenebene jeweils hinter den Eingangsarmatur 6 bzw. Ausgangsarmatur 7 liegt ist die Lage der Langenbolzen 15 sowie der Kurzbolzen 16 in den jeweiligen Armaturen 67 dargestellt. Zu erkennen ist das ein Anordnung der Langbolzen 15 bzw. der Kurzbolzen 16 an den Eckpunkten eines Quadrates auf gleichartigen Kreisbahnen vorgesehen ist. Die Lage der Langenbolzen 15 bzw. der Kurzbolzen 16 ist bezüglich des linearen Verlaufes des Isolierfluidkanales 3 versetzt zueinander vorgesehen. Dadurch ist die Möglichkeit gegeben die Langbolzen 15 zur Verbindung des der Eingangsarmatur 16 sowie der Ausgangsarmatur 7 unter Zwischenlage des Tragkörpers 2 einzusetzen und zusätzlich Kurzbolzen 16 zur Befestigung der Eingangsarmatur 6 an dem Kapselungsgehäuse 11 zuzulassen. Ein Versatz zwischen den Positionen der Langenbolzen 15 und der Kurzbolzen 16 erfolgt um ca. 45° bezogen auf die Längsachse des Isolierfluidkanals 3**.** Alternativ kann jedoch auch vorgesehen sein dass die Eingangsarmatur 6 und der Tragkörper 2 unabhängig von einer Verbindung der Ausgangsarmatur 7 mit dem Tragkörper 2 ausgeführt ist. Dadurch ist es möglich einen winkelstarren Verbund zwischen Eingangsarmatur 6 und Tragkörper 2 bzw. Ausgangsarmatur 7 und Tragkörper 2 unabhängig voneinander auszuführen.

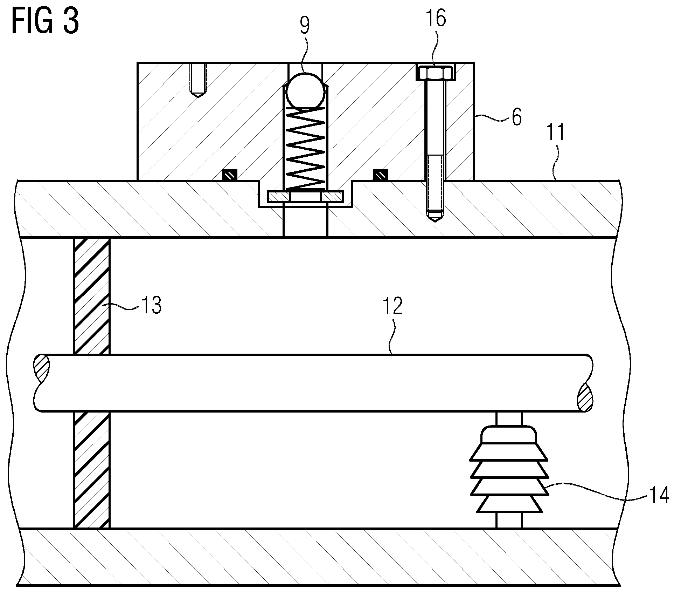

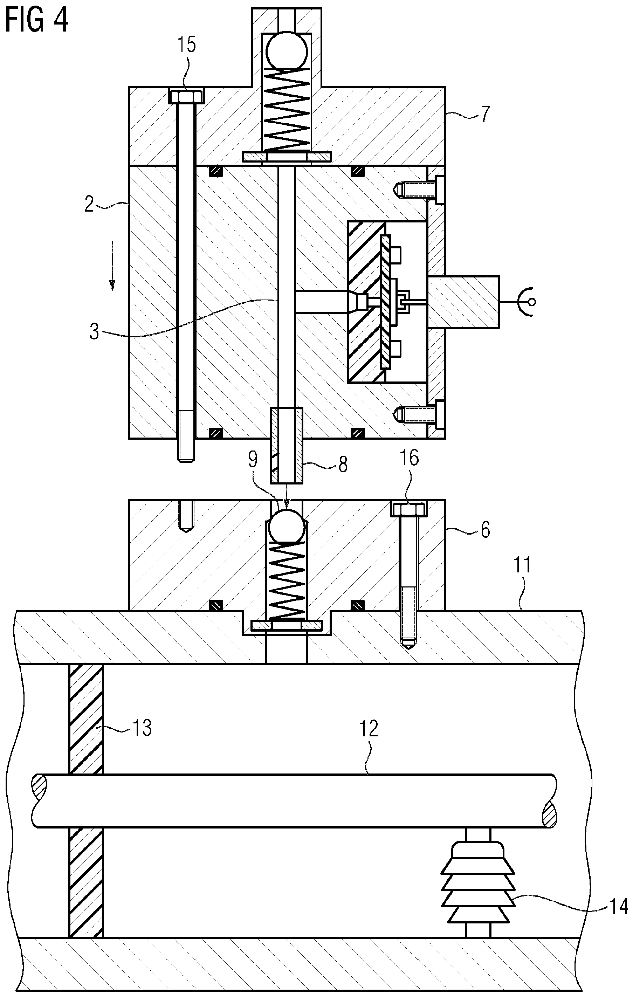

Anhand der Figuren 3 und 4 soll nunmehr eine Montage eines Isolierfluidüberwachungsblocks 1 an einem Kapselungsgehäuse 11 beschrieben werden. An einer Ausnehmung des Kapselungsgehäuse 11 wird die Eingangsarmatur 6 winkelstarr über die Kurzbolzen 16 fixiert. Zwischen der Eingangsarmatur 6 und dem Kapselungsgehäuse 11 ist ein fluiddichter Sitz aufgrund der Verwendung eines Dichtringes gegeben. Aufgrund des Ventilkörpers 9 in der Eingangsarmatur 6 ist die Ausnehmung in dem Kapselungsgehäuse 11 fluiddicht verschlossen. Um den Isolierfluidüberwachungsblocks 1 zu komplettieren, wird der Tragkörper 2 nebst daran befindlicher Ausgangsarmatur 7 auf die Eingangsarmatur 6 in Richtung des Verlaufes des Fluidkanals 3 bewegt. Dieser Zustand ist in der Figur 4 dargestellt die dortigen Langbolzen 15 positionieren bereits die Lage der Ausgangsarmatur 7 relativ zum Tragkörper 2**.** Es ist jedoch noch kein Verspannen der Ausgangsarmatur 7 mit dem Tragkörper 2 möglich. Mit dem Annähern des Tragkörpers 2 nebst Ausgangsarmatur 7 nähert sich das Betätigungsmittel 8 dem Ventilkörper 9 der Eingangsarmatur 6**.** Das Betätigungsmittel 8 ist dabei derart ausgestaltet, dass weggesteuert, d. h. mit einem Voranschreiten des Annäherns des Tragkörpers 2 an die Eingangsarmatur 6, ein Betätigen des Ventilkörpers 9 erfolgt. Dabei ist die Dimensionierung von Ventilkörper 9 und Betätigungsmittel 8 derart gewählt, dass mit dem Erreichen einer Dichtwirkung des in den Fügespalt zwischen Tragkörper 2 und Eingangsarmatur 6 befindlichen Dichtringes ein Betätigen des Ventilkörpers 9 beginnt. Kurz vor diesem Moment kann ein Greifen der Langenbolzen 15 in Gewindeausnehmungen der Eingangsarmatur 6 erfolgen. Über das Anziehen der Langenbolzen 15 wird einerseits der Tragkörper 2 gegen die Eingangsarmatur 6 gepresst und eine Dichtwirkung im Fügespalt zwischen Tragkörper 2 und Eingangsarmatur 6 sichergestellt. Zeitgleich erfolgt auch ein Spannen und Sichern der Ausgangsarmatur 7 an dem Tragkörper 2, sodass auch dort ein fluiddichter Verbund ausgebildet werden kann. Nunmehr ist der Isolierfluidüberwachungsblocks 1 sicher mit dem Kapselungsgehäuse 11 verbunden

Alternativ kann jedoch auch vorgesehen sein, dass die Ausgangsarmatur 7 unabhängig von einer Verbindung des Tragkörpers 2 mit der Eingangsarmatur 6 mit dem Tragkörper 2 verbunden ist und so ein fluiddichter Sitz zwischen Ausgangsarmatur 7 und Tragkörper 2 bereits vor einem Verbinden der Eingangsarmatur 6 mit dem Tragkörper 2 vorliegt.

## Patentansprüche

1. Isolierfluidüberwachungsblock (1) aufweisend einen Tragkörper (2) mit einem Isolierfluidkanal (3) mit einer Eingangsöffnung (4), wobei der Tragköper (2) eine Ausnehmung (18) aufweist, in welche zumindest teilweise ein Sensorelement (19) hineinragt,
wobei das Sensorelement (19) zumindest abschnittsweise Teil eines fluiddichten Verschlussmittels (20) der Ausnehmung (18) ist, wobei die Ausnehmung (18) mit dem Isolierfluidkanal (3) über einen Stichkanal (17) korrespondierend verbunden ist und der Isolierfluidkanal (3) einen linearen Verlauf aufweist und an einem entgegengesetzten Ende zur Eingangsöffnung (4) eine Ausgangsöffnung (5) angeordnet ist, **dadurch gekennzeichnet, dass** das Verschlussmittel (20) mittels Stoffschluss eine fluiddichte Barriere bildend innerhalb der Ausnehmung (18) angeordnet ist.

2. Isolierfluidüberwachungsblock (1) nach Anspruch 1,
**dadurch gekennzeichnet, dass**
die Ausnehmung (18) von einem Deckel (21) überspannt und verschlossen ist.

3. Isolierfluidüberwachungsblock (1) nach Anspruch 2,
**dadurch gekennzeichnet, dass**
der Deckel (21) eine Datenschnittstelle (22) aufweist.

4. Isolierfluidüberwachungsblock (1) nach einem der Ansprüche 1 bis 3,
**dadurch gekennzeichnet, dass**
das Sensorelement (19) einen Aktivteil (19a) und einen Passivteil (19b) aufweist, wobei der Aktivteil (19a) dem Isolierfluidkanal (3) korrespondierend ausgesetzt ist und der Passivteil (19b) der Informationsverarbeitung des Aktivteiles (19a) dient.

5. Isolierfluidüberwachungsblock (1) nach einem der Ansprüche 1 bis 4,
**dadurch gekennzeichnet, dass**
die Eingangsöffnung (4) von einem Ventilkörper (9) einer Eingangsarmatur (6) gesteuert ist.

6. Isolierfluidüberwachungsblock (1) nach einem der Ansprüche 1 bis 5,
**dadurch gekennzeichnet, dass**
der Tragkörper (2) im Wesentlichen quaderförmig, insbesondere würfelförmig ausgeformt ist.

7. Isolierfluidüberwachungsblock (1) nach einem der Ansprüche 1 bis 6,
**dadurch gekennzeichnet, dass**
die Eingangsöffnung (4) und die Ausgangsöffnung (5) von einer Eingangsarmatur (6) und einer Ausgangsarmatur (7) abgeschlossen sind, die jeweils verteilt um die Eingangsöffnung (4) und die Ausgangsöffnung (5) Befestigungspunkte aufweisen, welche in Fluchtrichtung versetzt zueinander angeordnet sind.

8. Isolierfluidüberwachungsblock (1) nach einem der Ansprüche 1 bis 7,
**dadurch gekennzeichnet, dass**
die Eingangsöffnung (4) ein Betätigungselement (8) für einen Ventilkörper (9) zum Steuern eines Zugangs zum Isolierfluidkanal (3) aufweist.

9. Isolierfluidüberwachungsblock (2) nach einem der Ansprüche 1 bis 8,
**dadurch gekennzeichnet, dass**
der Isolierfluidkanal (3) an einen Gasraum (10) eines Kapselungsgehäuses (11) einer Elektroenergieübertragungseinrichtung angekoppelt ist.

10. Montageverfahren eines Isolierfluidüberwachungsblockes (1) gemäß einem der Patentansprüche 1 bis 9,
**dadurch gekennzeichnet, dass**
eine Eingangsarmatur (6) mit einer Fluidbehälterwandung verbunden wird und
die Eingangsöffnung (4) des Isolierfluidkanals (3) mit der Eingangsarmatur (6) abgeschlossen wird.

11. Montageverfahren eines Isolierfluidüberwachungsblockes (1) nach Anspruch 10,
**dadurch gekennzeichnet, dass**
in einem gemeinsamen Arbeitsschritt eine Ausgangsöffnung (5) des Isolierfluidkanals (3) mit einer Ausgangsarmatur (7) abgeschlossen wird und die Eingangsöffnung (4) mit einer Eingangsarmatur (6) abgeschlossen wird.

12. Montageverfahren eines Isolierfluidüberwachungsblockes (1) nach Anspruch 10,
**dadurch gekennzeichnet, dass**
eine Ausgangsöffnung (5) des Isolierfluidkanals (3) mit einer Ausgangsarmatur (7) vor einem Verschluss der Eingangsöffnung (4), mit der der Eingangsarmatur (4) abgeschlossen wird.

13. Montageverfahren eines Isolierfluidüberwachungsblockes (1) nach Anspruch einem der Ansprüche 10 bis 12,
**dadurch gekennzeichnet, dass**
mit einem Abschluss der Eingangsöffnung (4) durch die Eingangsarmatur (6) über ein Betätigungselement (8) ein Ventilkörper (9) angesteuert wird.

## Claims

1. An insulating fluid monitoring block (1), having a support body (2) with an insulating fluid channel (3) with an inlet opening (4), wherein the support body (2) has a recess (18) into which a sensor element (19) protrudes at least partly,
wherein the sensor element (19) is at least in sections part of a fluid-tight closure means (20) of the recess (18),
wherein the recess (18) is correspondingly connected to the insulating fluid channel (3) via a branch channel (17) and the insulating fluid channel (3) has a linear course and an outlet opening (5) is arranged at an end opposite to the inlet opening (4), **characterized in that** the closure means (20) is arranged within the recess (18), forming a fluid-tight barrier by means of material bonding.

2. The insulating fluid monitoring block (1) according to claim 1,
**characterized in that**
the recess (18) is spanned and closed by a lid (21).

3. The insulating fluid monitoring block (1) according to claim 2,
**characterized in that**
the lid (21) has a data interface (22).

4. The insulating fluid monitoring block (1) according to one of claims 1 to 3,
**characterized in that**
the sensor element (19) has an active part (19a) and a passive part (19b), wherein the active part (19a) is correspondingly exposed to the insulating fluid channel (3) and the passive part (19b) is for information processing of the active part (19a).

5. The insulating fluid monitoring block (1) according to one of claims 1 to 4,
**characterized in that**
the inlet opening (4) is controlled by a valve body (9) of an inlet fitting (6).

6. The insulating fluid monitoring block (1) according to one of claims 1 to 5,
**characterized in that**
the support body (2) is substantially cuboid, in particular cube-shaped.

7. The insulating fluid monitoring block (1) according to one of claims 1 to 6,
**characterized in that**
the inlet opening (4) and the outlet opening (5) are sealed by an inlet fitting (6) and an outlet fitting (7) which each have fastening points distributed around the inlet opening (4) and the outlet opening (5) which are arranged offset to one another in a direction of egress.

8. The insulating fluid monitoring block (1) according to one of claims 1 to 7,
**characterized in that**
the inlet opening (4) has an actuating element (8) for a valve body (9) for controlling an access to the insulating fluid channel (3).

9. The insulating fluid monitoring block (2) according to one of claims 1 to 8,
**characterized in that**
the insulating fluid channel (3) is coupled to a gas space (10) of an encapsulation housing (11) of an electric energy transmission device.

10. A mounting method of an insulating fluid monitoring block (1) according to one of claims 1 to 9,
**characterized in that**
an inlet fitting (6) is connected to a fluid container wall, and the inlet opening (4) of the insulating fluid channel (3) is sealed by the inlet fitting (6).

11. The mounting method of an insulating fluid monitoring block (1) according to claim 10,
**characterized in that**
in a joint working step, an outlet opening (5) of the insulating fluid channel (3) is sealed by an outlet fitting (7) and the inlet opening (4) is sealed by an inlet fitting (6).

12. The mounting method of an insulating fluid monitoring block (1) according to claim 10,
**characterized in that**
an outlet opening (5) of the insulating fluid channel (3) with an outlet fitting (7) is sealed with the inlet fitting (4) prior to sealing of the inlet opening (4).

13. The mounting method of an insulating fluid monitoring block (1) according to claim one of claims 10 to 12,
**characterized in that**
a valve body (9) is controlled via an actuating element (8) by sealing the inlet opening (4) with the inlet fitting (6).

## Revendications

1. Bloc de surveillance de fluide isolant (1) comprenant un corps de support (2) avec un canal de fluide isolant (3) avec une ouverture d'entrée (4), dans lequel le corps de support (2) présente un évidement (18) dans lequel un élément capteur (19) fait saillie au moins partiellement,
dans lequel l'élément capteur (19) fait au moins partiellement partie d'un moyen de fermeture étanche aux fluides (20) de l'évidement (18),
dans lequel l'évidement (18) est relié de manière correspondante au canal de fluide isolant (3) par l'intermédiaire d'un canal de dérivation (17) et le canal de fluide isolant (3) présente un parcours linéaire et une ouverture de sortie (5) est disposée à une extrémité opposée à l'ouverture d'entrée (4), **caractérisé en ce que** le moyen de fermeture (20) est disposé à l'intérieur de l'évidement (18) au moyen d'une liaison matérielle, formant une barrière étanche aux fluides.

2. Bloc de surveillance de fluide isolant (1) selon la revendication 1,
**caractérisé en ce que**
l'évidement (18) est enjambé et fermé par un couvercle (21).

3. Bloc de surveillance de fluide isolant (1) selon la revendication 2,
**caractérisé en ce que**
le couvercle (21) comporte une interface de données (22).

4. Bloc de surveillance de fluide isolant (1) selon l'une quelconque des revendications 1 à 3,
**caractérisé en ce que**
l'élément capteur (19) comporte une partie active (19a) et une partie passive (19b), la partie active (19a) étant exposée de manière correspondante au canal de fluide isolant (3) et la partie passive (19b) servant au traitement des informations de la partie active (19a).

5. Bloc de surveillance de fluide isolant (1) selon l'une quelconque des revendications 1 à 4,
**caractérisé en ce que**
l'ouverture d'entrée (4) est contrôlée par un corps de soupape (9) d'un raccord d'entrée (6).

6. Bloc de surveillance de fluide isolant (1) selon l'une quelconque des revendications 1 à 5,
**caractérisé en ce que**
le corps de support (2) est essentiellement de forme parallélépipédique, en particulier cubique.

7. Bloc de surveillance de fluide isolant (1) selon l'une quelconque des revendications 1 à 6,
**caractérisé en ce que**
l'ouverture d'entrée (4) et l'ouverture de sortie (5) sont fermées par un raccord d'entrée (6) et un raccord de sortie (7), qui présentent chacun des points de fixation répartis autour de l'ouverture d'entrée (4) et de l'ouverture de sortie (5) qui sont disposés de manière décalée l'un par rapport à l'autre dans le sens de l'alignement.

8. Bloc de surveillance de fluide isolant (1) selon l'une quelconque des revendications 1 à 7,
**caractérisé en ce que**
l'ouverture d'entrée (4) comporte un élément d'actionnement (8) pour un corps de soupape (9) permettant de contrôler l'accès au canal de fluide isolant (3).

9. Bloc de surveillance de fluide isolant (2) selon l'une quelconque des revendications 1 à 8,
**caractérisé en ce que**
le canal de fluide isolant (3) est couplé à un espace gazeux (10) d'un boîtier d'encapsulation (11) d'un dispositif de transmission d'énergie électrique.

10. Procédé d'assemblage d'un bloc de surveillance de fluide isolant (1) selon l'une quelconque des revendications 1 à 9,
**caractérisé en ce que**
un raccord d'entrée (6) est relié à une paroi du récipient de fluide et
l'ouverture d'entrée (4) du canal de fluide isolant (3) est fermée avec le raccord d'entrée (6).

11. Procédé d'assemblage d'un bloc de surveillance de fluide isolant (1) selon la revendication 10,
**caractérisé en ce que**
dans une étape de travail commune, une ouverture de sortie (5) du canal de fluide isolant (3) est fermée avec un raccord de sortie (7) et l'ouverture d'entrée (4) est fermée avec un raccord d'entrée (6).

12. Procédé d'assemblage d'un bloc de surveillance de fluide isolant (1) selon la revendication 10,
**caractérisé en ce que**
une ouverture de sortie (5) du canal de fluide isolant (3) avec un raccord de sortie (7) devant une fermeture de l'ouverture d'entrée (4), avec laquelle le raccord d'entrée (4) est fermé.

13. Procédé d'assemblage d'un bloc de surveillance de fluide isolant (1) selon l'une quelconque des revendications 10 à 12,
**caractérisé en ce que**
lors de la fermeture de l'ouverture d'entrée (4) par le raccord d'entrée (6), un corps de soupape (9) est commandé par l'intermédiaire d'un élément d'actionnement (8).
